# EUROPEAN PATENT APPLICATION

(11) **EP 1 676 485 A1**
(43) Date of publication of application: **05.07.2006**
(21) Application number: 04078573.5
(22) Date of filing: 30.12.2004
(51) Int. Cl.: A23G 3/00, A23G 3/02

(54) **Confectionery product, process and assembly for producing said product**

(71) Applicant: Koninklijke Coöperatie Cosun U.A., 4704 RA Roosendaal (NL)
(72) Inventor: Gofers, Jacobus Wilhelmus Cornelis Anna, 2517 BJ Den Haag (NL); van Dijk, Gerard Johan, 4703 BT Roosendaal (NL)
(74) Representative: van Westenbrugge, Andries

(57) **Abstract**

A confectionery product which is shaped on all sides, can be produced by (i) preparing an aerated sugar mass, (ii) injecting said mass in a mould cavity defined by two separable mould surfaces having a temperature below 0°C, and (iii) separating the mould surfaces and removing the product.
An assembly for producing the confectionery product comprises: (a) a cooker for reducing the water content of a sugar mass, (b) an aerator for aerating the sugar mass, and (c) a injection-moulding device comprising a screw-piston injection unit (3) for advancing the sugar mass and injecting it into a mould cavity (2), wherein the injection unit is provided with heating means (6,7), and wherein cooling means (8) are provided for cooling the mould surfaces to a temperature below 0°C.

## Description

The present invention relates to sugar confectionery products, in particular products which are shaped on all sides and to a process of producing such confectionery.

There is a demand among consumers for confectionery products which are attractive and recognizable, for example shaped like a cartoon figure. Such sugar confectionery product should have a shape with high definition detail all around.

Such sugar products may for example be used in combination with cereal products such as cornflakes, the sugar products being mixed in between the cereal. As cereal is generally dosed in milk before consumption, it is furthermore desirable that such sugar products float in milk, as to offer an attractive and cheerful appearance.

A common sugar confectionery product able to float in milk, by having a density of less than 0,95 kg/dm³, is marshmallow; it consists of an aerated sugar mass containing a gelling agent. However, the known production processes for marshmallow type confectionery do not yield a product that is well defined on all sides, and therefore do not provide for the desired attractive en recognizable appearance of the product.

In the plastics industry injection moulding is a common method for producing well defined products with fine detail that are shaped on all sides. Some effort has been made for applying this technique to confectionery products. For example, WO 94/12046 discloses a method for injection-moulding of fat-containing materials, especially chocolate. This method comprises the steps of introducing a fat-containing mass in a mould cavity defined by two separable mould surfaces, allowing the mass to solidify in the mould cavity, and separating the mould surfaces for removing the product.

However, it has been found that these techniques are not suitable for obtaining a sugar confectionery product, as the sugar mass which is to be injected in the mould cavity is found to stick to the surface it is in contact with, which hampers removal of the product from the mould cavity and tends to cause obstruction of the mould cavity supply channels. Moreover the method of WO 94/12046 is aimed at producing thin-walled shells for filling with an edible composition and does not mention the desirability of having an all around highly detailed shape.

It is therefore an object of the invention to provide a sugar confectionery product which is attractive and recognizable by being shaped all around with fine detail. It is a further object of the invention to provide such a product which is able to float in milk. It is still a further object of the invention to provide a method and an assembly for producing such a product.

In one aspect of the present invention, there is provided a process for producing a confectionery product which is shaped on all sides, comprising:
● preparing a sugar mass,
● injecting said mass in a mould cavity defined by two separable mould surfaces, said surfaces being at a temperature below 0°C,
● separating the mould surfaces and removing the product.

In another aspect of the present invention, there is provided an assembly for producing a confectionery product which is shaped on all sides as described herein, comprising:
● a cooker for reducing the water content of a sugar mass
● an aerator for aerating the sugar mass
● a food-grade injection-moulding device, comprising a screw-piston injection unit for advancing the sugar mass and injecting it into a mould cavity defined by two separable mould surfaces, wherein the injection unit is provided with heating means for keeping the temperature of the sugar mass at the desired level op to the mould cavity, and wherein cooling means are provided for cooling the mould surfaces to a temperature below 0°C.

In a further aspect of the present invention, there is provided a confectionery product which is shaped on all sides, containing 50% to 92% sugars, 0.2% to 10% of a gelling agent, and having a density of less than 0,95 kg/dm³.

The invention will now be elucidated in more detail and referring to the figures, wherein:
Figure 1 is a schematic view of an injection-moulding device according to the invention, and
Figure 2 is an enlarged view of the mould in figure 1.

According to the invention a process for producing a sugar confectionery product comprises preparing a sugar mass containing more than 50 wt.% sugars, less than 18 wt.% water, 0.2 wt.% to 10 wt.% of one or more gelling agents, and up to 40 wt.% of further components, such as filling agents. The sugars can be glucose, fructose, saccharose (sucrose), maltose, and maltodextrins (malto-oligosaccharides); the preferred sugar is saccharose, or its mixtures with fructose and/or glucose. The gelling agents can be conventional gelling agents or water-binding agents such as gelatine, pectins, carrageenans, alginates, gellans, or other polysaccharides or hydrocolloids. Although gelatine is a preferred gelling agent, other gelling agents can be partly or wholly substituted for gelatine where reference is made below to particular embodiments involving gelatine. The further components may comprise filling and binding agents and/or sugar substitutes, such as sugar alcohols (sorbitol, mannitol, xylitol, lactitol, maltitol and the like), lactose, inulin, starch, galactomannans, gum Arabic and other non-gelling oligo- and polysaccharides, sweeteners (in case of low-sugar products), colorants, flavourings, fruit components, food acids (e.g. malic acid, citric acid), and the like. Preferably, the sugar mass contains 60-92 wt.%, most preferably 70-90 wt.% of sugars, 0.5-5 wt.% of gelling agents, 5-18 wt.%, especially 6-10 wt.% of water and 0-25 wt.% of further components. The sugar mass is preferably prepared by mixing a solution or dispersion containing the sugars and other non-gelling components and reducing its water content to below 8%, especially below 5%, and then adding a concentrated solution of the gelling agent. By way of example:
● 100 parts of a mixture of about 67% saccharose, about 10% glucose syrup and water are reduced to a dry matter content of about 96%, and mixed with
● 5 parts of a gelatine solution of about 38% gelatine in water.
The sugar-containing mixture may for example be reduced by cooking in an open pan at atmospheric pressure to a temperature of 110-150 °C, e.g. about 125°C, or by cooking using a vacuum cooker at a pressure of 0.05-0.5 bar, e.g. about 0.25 bar to a temperature of 70-110°C, e.g. about 93°C, and wherein said gelatine solution may be obtained by stirring and heating to about 70°C. By mixing said mixture and said gelatine solution a sugar mass having a dry matter content of about 92% is obtained.

Preferably said sugar mass is subsequently aerated to a density between 0.4 g/ml to 0.7 g/ml, for example by beating up the mass with a batch mixer, or more preferably by aerating it with a continuous aerating system, yielding a particularly suitable texture, for example a Mini Mondo type mixer by Mondomix, the input temperature of the sugar mass being e.g. about 85°C, the output temperature being about 50°C.

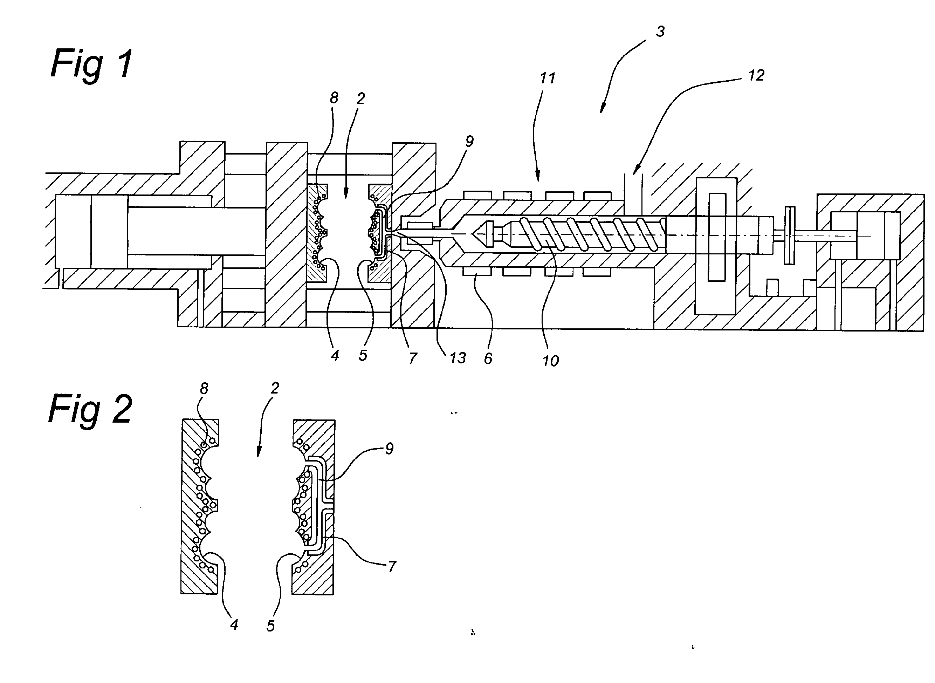

Next the sugar mass is fed into a food-grade injection-moulding device for forming the product according to the invention. Figure 1 shows the injection-moulding device comprising an injection unit 3 and a mould cavity 2 (shown enlarged in figure 2). The injection unit comprises a cylinder 11, a supply channel 12 at one end of the cylinder, and a reciprocating screw plunger 10 located in the cylinder.

The sugar mass is fed into the cylinder via the supply channel and advanced to the injection end of the cylinder by rotating screw plunger 10. Subsequently the screw plunger is moved forward and the sugar mass in front of the screw plunger is injected via injection nozzle 13 into the mould cavity 2.

It is found that by using a screw type plunger instead of a normal plunger for advancing the sugar mass, absorption of the injection forces by the aerated sugar mass is reduced.

The injection unit is provided with heating means 6, 7 for keeping the temperature of the sugar mass at the desired level up to the mould cavity, the sugar mass is kept at a temperature of about 40°C so as to keep it fluid enough to be injected. The heating means comprise heating elements 6 for heating the sugar mass up to the mould, and means 7 for heating the supply channel 9 in the mould, also called a runner.

The mould surfaces 4, 5 are provided with cooling means 8 and are kept at a temperature below 0°C, preferably below minus 30°C, especially below minus 70°C, down to as low as minus 200°C. It has been found that sticking of the sugar mass to the mould surfaces, which hampers removal of the product from the mould cavity, is reduced by keeping the mould surfaces at a low temperature. A temperature below minus 70°C is preferred as sticking of the sugar mass is significantly reduced below that temperature.

Sticking of the sugar mass to the mould surfaces may further be reduced by coating the mould surfaces with Teflon.

After the product is sufficiently solidified, the mould surfaces are separated and the formed product is ejected in a known manner, for example by ejection pins. The mould surface is then available for a new injection cycle. The ejected products are dried, for example by a hot airflow, microwave or infrared radiation.

It is of considerable importance that the production cycle is fast for minimizing the production costs and maximizing production rate. With each injection the cold mould surfaces come in contact with the hot sugar mass, thereby raising the temperature of said surfaces.

A fast production cycle requires fast regeneration of the temperature of the mould surfaces. Therefore the mould is preferably provided with cooling means for fast regeneration of the temperature of the mould surfaces, preferably a refrigerant is brought as close to the non-forming side of the mould surfaces as possible. The mould may for example be provided with through channels 8 for passage of a refrigerant, preferably liquid nitrogen, wherein said channels are positioned just below said mould surfaces. Moreover, the mould is preferably made of a metal having a high thermal conductivity, for example aluminium.

Furthermore the mould may be provided with multiple cavities for simultaneously forming multiple products.

The product resulting from the moulding process described above is a confectionery product which is shaped on all sides, containing 50% to 92% sugars, 0.2% to 10% of a gelling agent, and having a density of less than 0,95 kg/dm³. The composition of the shaped product can be the same as that of the sugar mass described above. The preferred density is between 0.7 and 0.9 kg/dm³. The shaped product may have any shape, such as geometrical shapes (cubes, spheres, rods, etc.), animal or human or cartoon figures, etc., and any size. The preferred maximum size, i.e. the maximum spatial distance between two parts of the product, is between 0.5 cm to 3 cm, whereas the minimum size is preferably from 0.1 cm to 0.4 cm.

The products can have any colour or colour combination, flavour etc. If desired, the shaped confectionery product can be coated with a water-resistant coating, a sugar coating, a colour coating, using conventional coating techniques. The shaped products can be used as a component in food materials, e.g. intended to be mixed with a liquid, such as soup, milk, and the like, where they can float. They can also be used as such, i.e. as candy, e.g. wine gums, or as a component in other foodstuffs such as particulates or granules on sandwiches and the like. The products are attractive both by their softness and excellent mouth-feel, and by their appealing appearance.

## Claims

1. A process for producing a confectionery product which is shaped on all sides, comprising:
● preparing a sugar mass,
● injecting said mass in a mould cavity defined by two separable mould surfaces, said surfaces being at a temperature below 0°C,
● separating the mould surfaces and removing the product.

2. Process according to claim 1, wherein the sugar mass contains more than 50% up to 92% sugars, 5 to 18% of water, and 0.2% to 10% of one or more gelling agents.

3. Process according to claim 1 or 2, wherein the sugar mass is aerated to a density between 0.4 kg/dm³ and 0.7 kg/dm³.

4. Process according to any one of claims 1-3, wherein the sugar mass is at a temperature of 40° to 80°C on injection.

5. Process according to any one of claims 1-4, wherein said mould surfaces are at a temperature below minus 40° C on injection, preferably below minus 70°C.

6. Process according to any one of claims 1-5, wherein the sugar mass is prepared by mixing:
● 100 parts of a mixture of about 60-75 wt.% saccharose, 5-15 wt% glucose syrup and water, reduced to a dry matter content of above 95%, and
● 3-7 parts of a gelatine solution containing 30-50 % gelatine in water.

7. An assembly for producing a confectionery product according to any one of claims 1-6, comprising:
● a cooker for reducing the water content of a sugar mass,
● an aerator for aerating the sugar mass,
● a food-grade injection-moulding device, comprising a screw-piston injection unit (3) for advancing the sugar mass and injecting it into a mould cavity (2) defined by two separable mould surfaces (4, 5), wherein the injection unit is provided with heating means (6, 7) for keeping the temperature of the sugar mass at the desired level up to the mould cavity, and wherein cooling means (8) are provided for cooling the mould surfaces to a temperature below 0° C.

8. Assembly according to claim 7, wherein said boiler is an open boiler.

9. Assembly according to claim 7, wherein said boiler is a vacuum cooker.

10. Assembly according to any one of claims 7-9, wherein said aerator is a batch mixer.

11. Assembly according to any one of claims 7-9, wherein said aerator is a continuous aeration system.

12. Assembly according to any one of claims 7-11, wherein said injection-moulding device has means (7) for heating the runner (9).

13. Assembly according to any one of claims 7-12, wherein the mould surfaces (4, 5) are formed in a mould which is made of a metal having a high thermal conductivity, for example aluminium.

14. Assembly according to any one of claims 7-13, wherein said surfaces (4, 5) are Teflon coated.

15. Assembly according to any one of claims 7-14, wherein the mould has through channels (8) for passage of a refrigerant, preferably liquid nitrogen, said channels preferably being positioned just below said mould surfaces for cooling said surfaces to a temperature below minus 40°C, preferably below minus 70°C.

16. A confectionery product which is shaped on all sides, containing 50% to 92% sugars, 0.2% to 10% of a gelling agent, and having a density of less than 0,95 kg/dm³.

17. Confectionery product according to claim 17, having a maximum size between 0.5 cm and 3 cm.
